# EUROPEAN PATENT APPLICATION

(11) **EP 4 686 658 A1**
(43) Date of publication of application: **04.02.2026**
(21) Application number: 25190927.1
(22) Date of filing: 22.07.2025
(51) Int. Cl.: B64G 1/10, B64G 1/22

(54) **INTEGRATED ARRAY ELEMENT STRUCTURE**

(30) Priority: 02.08.2024 US 202463678638 P
(71) Applicant: MacDonald, Dettwiler and Associates Corporation, Ste-Anne-de-Bellevue, QC H9X 3R2 (CA)
(72) Inventor: Glâtre, Karim, Sainte-Anne-de-Bellevue, Quebec, H9X 3R2 (CA)
(74) Representative: Grünecker Patent- und Rechtsanwälte PartG mbB

(57) **Abstract**

Provided is a spacecraft (100) and an integrated panel (120) for providing integrated communications and structural functionality of the spacecraft. The integrated panel (120) is configured to form and provide a structural path of at least a part of a platform(110) of the spacecraft. The integrated panel (120) includes an array (130) for transmitting or receiving a plurality of communication signals. The array (130) includes a plurality of array elements (132) for transmitting or receiving the plurality of communication signals. A first array element of the array elements (132) is disposed at least in part internally in the platform (110) with respect to a surface of the integrated panel (120) . The first array element (132) includes first communications components (134) configured to transmit or receive the plurality of communication signals. The first array element includes a first array element structure (136) configured to provide a structure of the first array element (132) and, at least in part, the structural path of the integrated panel (120).

## Description

### Technical Field

The following relates generally to structures for communications arrays, and more particularly to the structures of spacecraft where the spacecraft includes a communications array.

### Introduction

Existing spacecrafts include at least one communications antenna. In some existing systems, the antennas are developed independently from the spacecraft platform (the primary structure of the spacecraft) and affixed to the spacecraft platform.

For example, in existing arrays, the array elements are mounted to a panel of the spacecraft. These array elements protrude from the panel contributing to the spacecraft volume even in a stowed configuration. Furthermore, these array elements contribute additional mass to the space craft which is dedicated specifically to the structure of the array. This is undesirable as minimizing overall spacecraft mass and volume is beneficial in space applications particularly during launch of the spacecraft.

Furthermore, increased demand for direct to device transmissions have increased the demand for array based antennas capable of supporting communications with multiple devices whose location is not predetermined or fixed (i.e. mobile). Therefore, existing systems increasingly include arrays with more array elements and reduced reflector sizes over previous existing systems. The array elements of these systems account for a higher proportion of the overall spacecraft mass and volume attributable to the array over previous existing systems (i.e. with larger reflectors).

Accordingly, there is a need for an improved spacecraft platform structure for carrying an array antenna that overcomes at least some of the disadvantages of existing spacecraft platforms.

### Summary

Provided is an integrated panel for providing integrated communications and structural functionality of a spacecraft. The integrated panel is configured to form and provide a structural path of at least a part of a platform of the spacecraft. The integrated panel includes an array for transmitting or receiving a plurality of communication signals. The array includes a plurality of array elements for transmitting or receiving the plurality of communication signals. A first array element of the array elements is disposed at least in part internally in the platform with respect to a surface of the integrated panel. The first array element includes first communications components configured to transmit or receive the plurality of communication signals. The first array element includes a first array element structure configured to provide a structure of the first array element and, at least in part, the structural path of the integrated panel.

The platform may include framing. The integrated panel may be configured to be affixed to the platform via the framing.

The surface may be configured to be disposed in substantial planer alignment with the framing.

The array may include a direct radiating array (DRA).

An antenna of the spacecraft may include an array fed reflector (AFR) antenna. The AFR antenna may include the array and a corresponding reflector.

The reflector may be rotatably fixed to the platform for rotating between a stowed and deployed configuration. The reflector in the stowed configuration may be disposed along the integrated panel at an offset distance just beyond interference with the array.

The antenna may include a second array and a second corresponding reflector.

The plurality of array elements may be configured as cups. Each array element may be coupled with at least one other array element. The array elements may be arranged in a honeycomb arrangement.

The first array element structure may be thicker than a minimum thickness for providing a structure for the first array element based on a structural threshold of the integrated panel.

The spacecraft may include a payload for providing the communications signals to the array elements. The payload may be disposed close to the array elements and communicatively connected to the array elements.

In another aspect, provided is a spacecraft. The spacecraft includes an antenna for providing communications of the spacecraft. The antenna may include an array for transmitting or receiving a plurality of communication signals. The array may include a plurality of array elements for transmitting or receiving the plurality of communication signals. The first array element of the array elements includes first communications components configured transmit or receive the plurality of communication signals. The first array element further includes a first array element structure configured to provide a structure of the first array element and, at least in part, the structural path of the integrated panel. The spacecraft includes a platform for providing the primary structure of the spacecraft. The platform includes an integrated panel configured to form and provide a structural path of at least a part of a platform of the spacecraft. The integrated panel may include the array disposed at least in part internally in the platform with respect to a surface of the integrated panel.

The platform may include framing. The integrated panel may be fixed to the platform via the framing.

The surface may be configured to be disposed in substantial planer alignment with the framing.

The array may include a direct radiating array (DRA).

The antenna may include an array fed reflector (AFR) antenna. The AFR antenna may include the array and a corresponding reflector.

The reflector may be rotatably fixed to the platform for rotating between a stowed and deployed configuration. The reflector in the stowed configuration may be disposed along the integrated panel at an offset distance just beyond interference with the array.

The antenna may include a second array and a second corresponding reflector.

The plurality of array elements may be configured as cups and each array element is coupled with at least one other array element. The array elements may be arranged in a honeycomb arrangement.

The first array element structure may be thicker than a minimum thickness for providing a structure for the first array element based on a structural threshold of the integrated panel.

The spacecraft may include a payload for providing the communications signals to the array elements. The payload may be disposed close to the array elements and communicatively connected to the array elements.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a spacecraft having an integrated spacecraft platform and antenna array, according to an embodiment;
Figure 2 is an on face view schematic diagram of the spacecraft of Figure 1 including a direct radiating array (DRA) antenna, according to an embodiment;
Figure 3 is a perspective and focus view schematic of the spacecraft of Figure 1 including a DRA array, according to an embodiment;
Figure 4A is a perspective view schematic of an array fed reflector (AFR) spacecraft of Figure 1, according to an embodiment;
Figure 4B is a first side view schematic of an AFR spacecraft of Figure 4A, according to an embodiment;
Figure 4C a second side view schematic of an AFR spacecraft of Figure 4A, according to an embodiment;
Figure 5A is a perspective view of the AFR spacecraft of Figure 4A in a stowed configuration, according to an embodiment;
Figure 5B is a side view of the AFR spacecraft of Figure 4A in a stowed configuration, according to an embodiment; and
Figure 5C is a cross sectional side view of the AFR spacecraft of Figure 4A in a stowed configuration, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

The following relates generally to a panel of a spacecraft platform, and more particularly to a spacecraft panel with an integrated array. The array elements array are integrated into the panel. By integrating the array elements into the panel, the array elements contribute to the panel's overall structure and structural integrity in addition to performing their communication functions. This contribution beneficially offsets mass contributions to the spacecraft platform from non-array components. The integration of the array elements into the panel reduces the protrusion of the array elements and the corresponding profile of the spacecraft beneficially reducing the volume of the spacecraft attributable to the array. The panel can be used as a panel or side of a spacecraft platform structure along with other, traditional spacecraft platform panels.

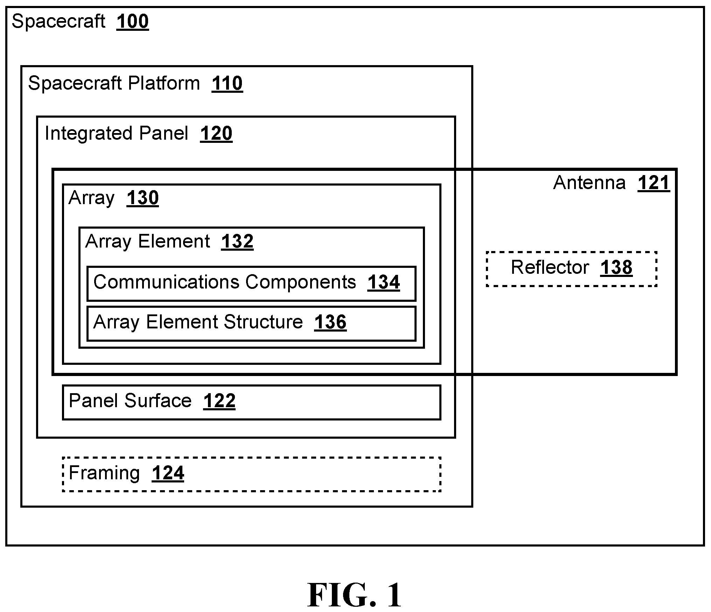

Referring to Figure 1, shown therein a block diagram of an integrated spacecraft 100, according to an embodiment. Spacecraft 100 may be known as a space vehicle 100, platform 100, or satellite 100. The Spacecraft 100 is configured to be launched and deployed in space. The launching may be via a launch vehicle (not shown) configured to launch one or more spacecrafts 100.

The spacecraft 100 includes a spacecraft platform 110 (also referred to as simply platform 110). The platform 110 includes the components of the spacecraft 100 that provide the main or primary structure or body of the spacecraft 110 on and within which other components (such as equipment and payloads) are mounted. It will be appreciated that the platform 110 may include components that provide functions in addition to providing the structure of the spacecraft 100. Such functions may include communications functions.

The platform 110 includes at least one integrated panel 120. The integrated panel 120 forms a side of the platform 110 or a portion thereof. The integrated panel 120 may be of any shape or disposition on the spacecraft 100. In some embodiments, the integrated panel 120 is flat. In other embodiments, the integrated panel 120 may be curved.

In some embodiments, the platform 110 has multiple sides and the integrated panel 120 forms one of them or a portion thereof or is distributed across multiple sides. In some embodiments, the platform 110 is continuous and the integrated panel 120 forms the entire platform 110.

The spacecraft 100 includes at least one antenna 121. The antenna 121 provides communications functionality for the spacecraft 100. In an example, the antenna is a multi-beam antenna 121.

The antenna 121 includes at least one array 130. The array 130 transmits or receives signals of the antenna 121.

The array 130 includes a plurality of array elements 132. The array elements 132 act as radiating elements for transmitting or receiving RF signals. The array elements 132 may be known as radiating elements 132 or feeds 132. The array elements 132 are integrated into the integrated panel 120. Each array element 132 is at least partially embedded in a surface 122 of the integrated panel 120. In some embodiments, the array elements 132 partially protrude beyond the surface 122. It will be appreciated that this protrusion, if present, is less than the full protrusion of array elements of existing systems. The reduction of this protrusion over existing systems beneficially minimizes the volume occupied by the spacecraft 100, particularly during launch.

Each array element 132 in the array 130 includes associated communications components 134. The communications components 134 provide the communications functions of the array element 132 such as transmission and reception. In an example, the communications components 134 include a waveguide and a horn (not shown).

Each array element 132 includes an array element structure 136. The array element structure 136 both functions as a structure for the corresponding array element 132 and contributes to the structure and structural integrity of the integrated panel 120. In an example, the array elements 132 provides a certain stiffness to the integrated panel 120. It will be appreciated that array element structure 136 and the communications components 134 are not mutually exclusive in that they may be the same components in whole or in part.

The structure and structural integrity of the integrated panel 120 provided by the array elements 132 provides a structural path for the spacecraft platform 110. In existing systems, this structural path is provided by traditional panels such as composite panels. In providing this structural path the mass of the integrated panel 120 beneficially provides the dual purpose of structure and communication. This dual purpose reduces the traditional panels or portions thereof in the spacecraft platform 110 beneficially reducing the mass of the spacecraft platform 110.

In some embodiments, the array elements 132 are configured and disposed to optimize their contribution to the platform 110 and the platform's 110 structural integrity. In an example, the array elements are cups arranged in a honeycomb lattice configuration, also referred to as a hexagonal tile or honeycomb panel composition. The cups facilitate coupling between the array elements 132. In these embodiments, the honeycomb lattice configuration beneficially provides stiffness and optimizes the structural integrity of the integrated panel 120.

In some embodiments, the array element structure 136 is optimized according to desired structural specifications and thresholds. In an example, the array element structure is composed of materials and is of a thickness that exceeds the minimum material strength or thickness for providing the communications. In this example, the array element 132 satisfies desired structural specifications with at least a portion of the array element structure 136 also supporting communication functions.

In some embodiments, the antenna 121 includes a reflector 138. The reflector 138 reflects signals to or from the array elements 132. The reflector 138 facilitates additional gain. This is beneficial for high gain applications such as geosynchronous equatorial orbit (GEO) stationary applications.

In some embodiments, the spacecraft platform 110 includes framing 124. The framing 124 contributes to the structure of the spacecraft platform 110 in addition to the structural contribution provided by the integrated panel 120. It will be appreciated that the structural contribution of the integrated panel 120 at least mitigates the extent of the framing 124in the platform 110, beneficially minimizing the mass of the spacecraft 100.

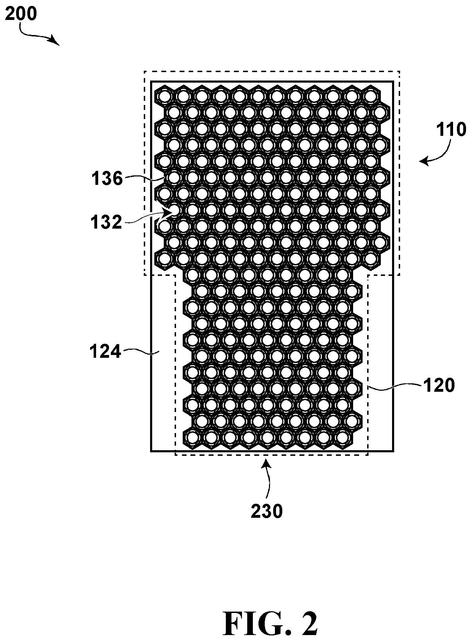

Referring now to Figure 2, shown therein is an on face view schematic diagram of a spacecraft 200 including a direct radiating array (DRA) 230, according to an embodiment. The spacecraft 200 is an embodiment of the spacecraft 100 of Figure 1. The spacecraft 200 includes a platform 110, integrated panel 120, and framing 124.

The integrated panel 120 forms at least part of the nadir deck of the spacecraft 200 such that, in operation, the DRA array 230 is terrestrial body (i.e. planet, moon, asteroid) facing.

The array elements 132 are arranged such that each array element structure 136 abuts one or more other array element structures 136. In this arrangement, the array elements 132 are arranged as a contiguous lattice. This arrangement provides the structure of the integrated panel 120.

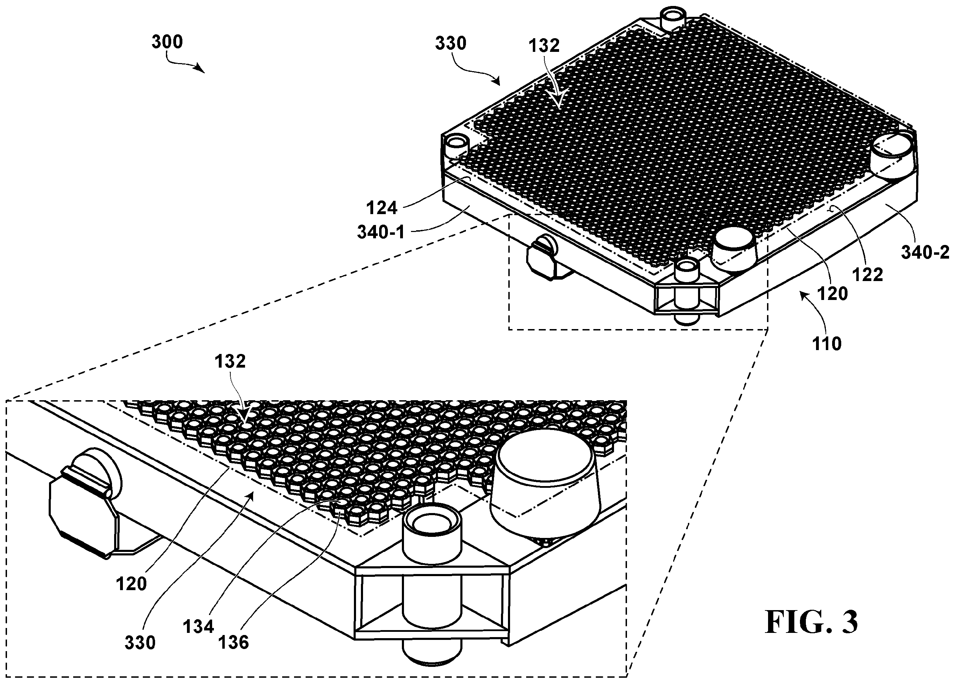

Referring now to Figure 3, shown therein is a perspective and focus view schematic of a spacecraft 300 including a DRA 330, according to an embodiment. The spacecraft 300 is an embodiment of the spacecraft 100 of Figure 1. The spacecraft 300 includes a platform 110, integrated panel 120, and framing 124.

The array elements 132 are integrated into the integrated panel 120. The integrated panel 120 is mounted to framing 124. The surface 122 of the integrated panel 120 is aligned with the framing 124. The array elements 132 are embedded in the surface 122 (i.e. disposed partially above and partially below the surface 122).

Each array element 132 includes communications components 134 and an array element structure 136. The communications components 134 are disposed inside the array element structure 136. The array elements 132 are arranged contiguously to form the structure of the integrated panel 120. In an example, the array element structure 136 is a hexagonal cup configured to provide stiffness to the integrated panel 120. In some embodiments, the communications components 134 are integrated into a traditional panel to provide the RF element functionality of the integrated panel 120.

The integrated panel 120 is physically connected to standard panels 340-1 and 340-2 to form the platform 110. In an example, the connection is by known means via the framing 124.

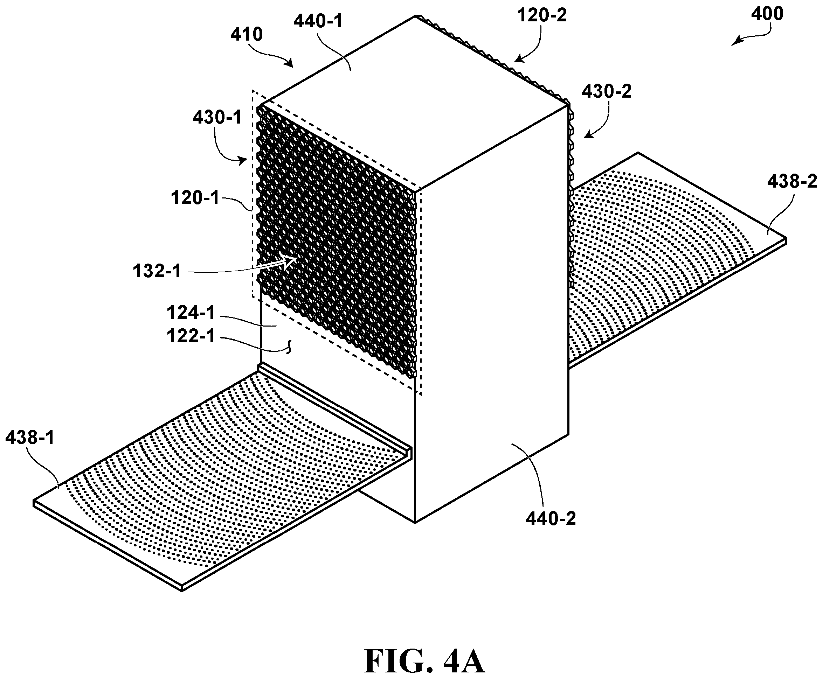

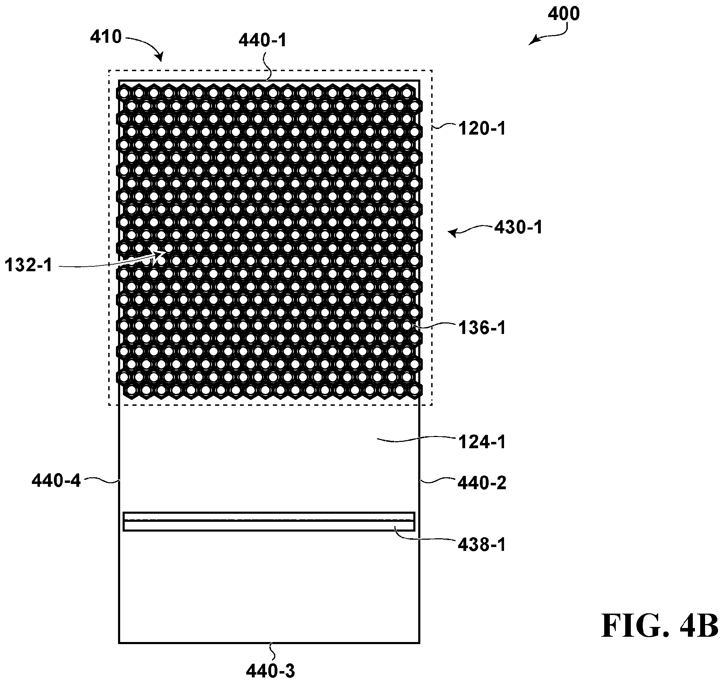

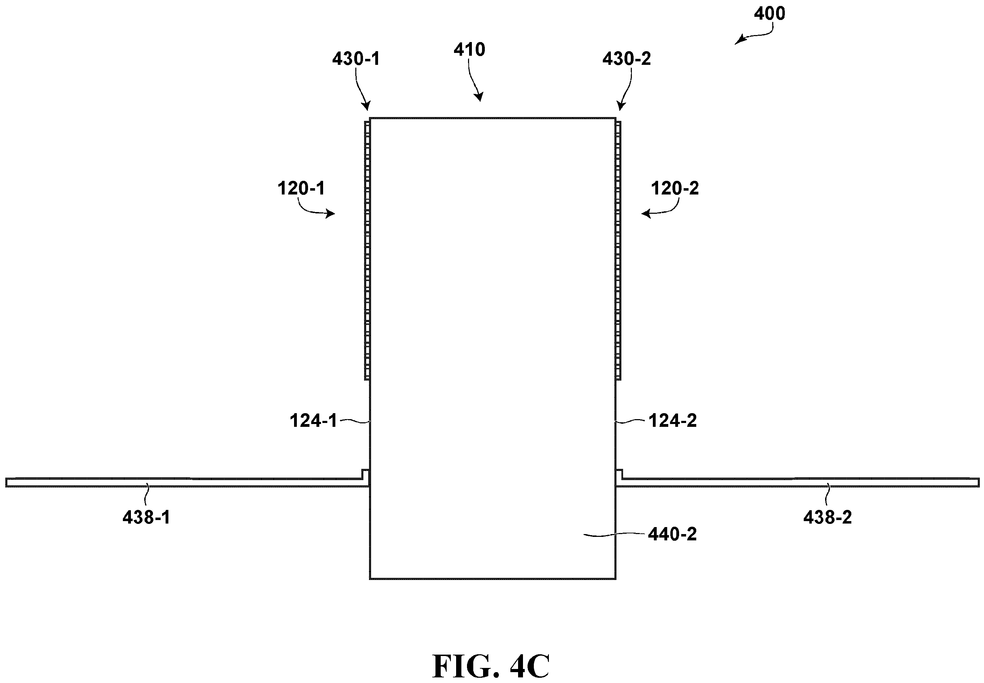

Referring to Figures 4A through 4C, shown therein is an array fed reflector (AFR) spacecraft 400, according to an embodiment. The AFR spacecraft 400 is an embodiment of the spacecraft 100 of Figure 1.

The spacecraft 400 includes a platform 410. Platform 410 is configured similarly to platform 110 of Figure 1. The structure 410 is rectangularly prismatic. The structure 410 includes two integrated side panels 120-1, 120-2, framing 124-1, 124-2, and four standard panels 440-1, 440-2, 440-3, 440-4. The integrated side panel 120-1 and corresponding framing 124-1is on the opposing side of the platform 410 from side panel 120-2 and corresponding framing 124-1. The shape, number of panels, and number and positioning of integrated panels 120 may vary in other embodiments and such embodiments are expressly contemplated.

Integrated panel 120-1 includes array 430-1. The array elements 132-1 of the array 430-1 may be known as feeds 132-1 or array feeds 132-1 The array elements 132-1 are integrated into the integrated panel 120-1. The surface 122-1 of the integrated panel 120-1 aligned with the framing 124-1. The array elements 132-1 are embedded in the surface 122-1 (i.e. disposed partially above and partially below the surface 122-1).

The size of each array element 132-1 may be configured relative to a desired wavelength (Lambda). It will be appreciated that the array elements of AFRs are typically configured relative to higher multiples of the desired wavelength (Lambda) than array elements of DRAs. In an example, a DRA includes array elements 132-1 of .6 times Lambda and a corresponding AFR includes array element 132-1 of 1.5 time Lambda. Accordingly, the array elements 132-1 of the AFR array 430-1 may be bigger in terms of wavelength than the array elements 132 of DRA array 330-1 of Figure 3.

The array elements 132-1 are arranged such that each array element structure 136-1 abuts one or more of the remaining array element structures 136-1. In this arrangement, the array elements 132-1 are arranged a contiguous lattice. This arrangement provides the structure of the integrated panel 120-1. Integrated panel 120-2 is similarly configured with array 430-2 and framing 124-2.

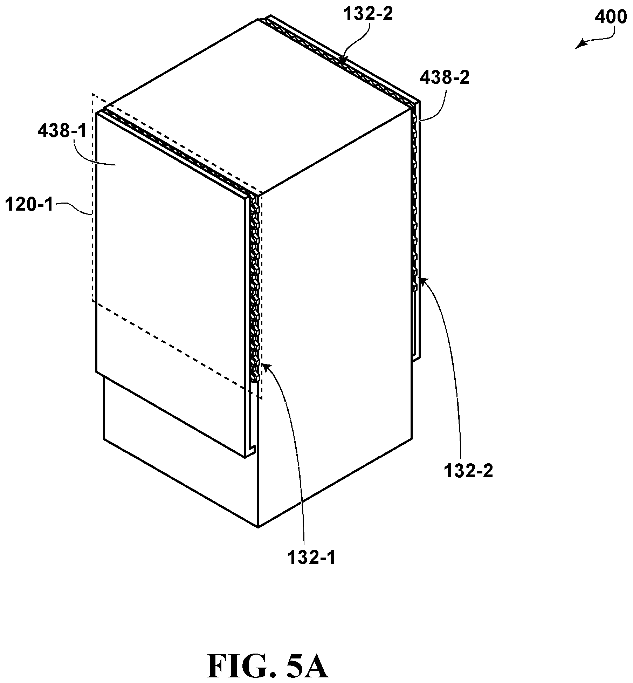

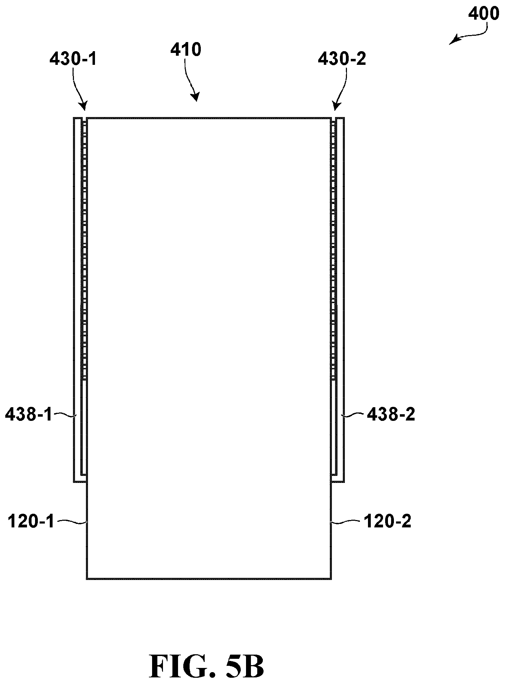

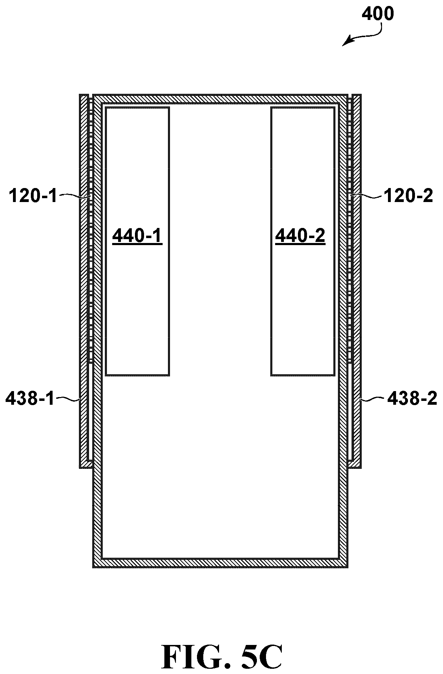

Spacecraft 400 includes reflectors 438-1 and 438-2. Reflectors 438-1 and 438-2 correspond to arrays 430-1 and 430-2 respectively. In some embodiments, the reflectors 438-1, 438-2 are affixed to framing 124-1 and 124-2, respectively. In some embodiments, the reflector 438 is rotatably affixed to the corresponding framing 124 for transitioning the reflectors to the deployed configuration shown in Figures 4A through 4C from a stowed configuration of Figures 5A through 5C.

The reflector 438-1, in the deployed position, is disposed to receive signals from the array elements 132-1 and reflect the signals towards a designated terrestrial body (i.e. planet, moon, asteroid) or target thereon. The reflector 438-2 is similarly disposed with respect to array elements 132-2.

In some embodiments, framing 124-1 is used to extend the platform 410 to provide mounting locations such that the reflectors 438 would be in the field of view of the array elements 132-1. In an example, the platform 410 includes framing 124-1 extending from the integrated panel 120-1 to the location where the reflector 438-1 is affixed to the platform 410. The offset provided by the framing 124-1 disposes the reflectors, in operation, in the field of view of the array elements 132-1.

Referring to Figures 5A through 5C, shown therein are schematic diagrams from a perspective view, side view and cross sectional side view, respectively of the AFR spacecraft 400 in a stowed configuration, according to an embodiment. The reflectors 438-1 and 438-2 are rotated from the deployed configuration shown in Figures 4A through 4C. In the stowed configuration, the reflectors 438-1 and 438-2 lay along the integrated panels 120-1 and 120-2. It will be appreciated that the integration of the arrays 430-1 and 430-2 in integrated panels 120-1, 120-2, respectively minimizes the protrusion of the array elements 132-1, 132-2. The minimization of this protrusion beneficially facilitates maximizing the stowage of the reflectors and minimization of the stowed volume of the spacecraft 400.

The AFR spacecraft 400 includes a payload 440-1 corresponding to integrated panel 120-1 and a payload 440-1 corresponding to integrated panel 120-2. The payload 440-1 provides a signal to array elements 132-1 and payload 440-2 provides a signal to array elements 132-2.

The payload 440-1 is disposed close to the array elements 132-1. The disposition of the array elements 132-1 at least partially below the surface 122-1 reduces the distance between the array elements 132-1 and the payload 440-1 over surface mounted array elements. In an example, the payload 440-1 is disposed in contact with the array elements 132-1 minimizing the distance. This reduced distance enables shorter connections between the payload and the array elements 132-1 beneficially reducing losses and improving overall system efficiency. Payload 440-2 and array elements 132-2 are similarly disposed and improved. It will be appreciated that this benefit is array type agnostic. For example, this benefit is consistent with the DRA 330 of Figure 3.

While the above description provides examples of one or more apparatus, methods, or systems, it will be appreciated that other apparatus, methods, or systems may be within the scope of the claims as interpreted by one of skill in the art.

## Claims

1. An integrated panel for a platform of a spacecraft, wherein the integrated panel comprises:
an array for transmitting or receiving a plurality of communication signals, the array comprising a plurality of array elements for transmitting or receiving the plurality of communication signals, wherein a first array element of the array elements is disposed at least in part internally in the platform with respect to a surface of the integrated panel and wherein the first array element comprises:
first communications components configured transmit or receive the plurality of communication signals; and
a first array element structure configured to provide a structure of the first array element and, at least in part, a structural path of the integrated panel.

2. The integrated panel of claim 1, wherein the platform comprises framing and the integrated panel is configured to be affixed to the platform via the framing.

3. The integrated panel of claim 2, wherein the surface is configured to be disposed in substantial planer alignment with the framing.

4. The integrated panel of claim 1, wherein an antenna of the spacecraft comprises an array fed reflector (AFR) antenna and wherein the AFR antenna comprises the array and a corresponding reflector.

5. The integrated panel of claim 4, wherein the reflector is rotatably fixed to the platform for rotating between a stowed and deployed configuration, wherein the reflector in the stowed configuration is disposed along the integrated panel at an offset distance just beyond interference with the array.

6. The integrated panel of claim 1, wherein the plurality of array elements are configured as cups and each array element is coupled with at least one other array element, the array elements arranged in a honeycomb arrangement.

7. The integrated panel of claim 1, wherein the first array element structure is thicker than a minimum thickness for providing a structure for the first array element based on a structural threshold of the integrated panel.

8. The integrated panel of claim 1, wherein the spacecraft comprises a payload for providing the communications signals to the array elements wherein the payload is disposed close to the array elements and communicatively connected to the array elements.

9. A spacecraft comprising:
an antenna for providing communications of the spacecraft, the antenna comprising an array for transmitting or receiving a plurality of communication signals, the array comprising a plurality of array elements for transmitting or receiving the plurality of communication signals, wherein a first array element of the array elements comprises:
first communications components configured transmit or receive the plurality of communication signals; and
a first array element structure configured to provide a structure of the first array element and, at least in part, the structural path of the integrated panel; and
a platform for providing the primary structure of the spacecraft, the platform comprising an integrated panel configured to form and provide a structural path of at least a part of a platform of the spacecraft,
wherein the integrated panel comprises the array disposed at least in part internally in the platform with respect to a surface of the integrated panel.

10. The spacecraft of claim 9, wherein the platform comprises framing and the integrated panel is fixed to the platform via the framing.

11. The spacecraft of claim 10, wherein the surface is configured to be disposed in substantial planer alignment with the framing.

12. The spacecraft of claim 9, wherein the array comprises a direct radiating array (DRA).

13. The spacecraft of claim 1, wherein the reflector is rotatably fixed to the platform for rotating between a stowed and deployed configuration, and wherein the reflector in the stowed configuration is disposed along the integrated panel at an offset distance just beyond interference with the array.

14. The spacecraft of claim 1, wherein the antenna comprises a second array and a second corresponding reflector.

15. The spacecraft of claim 9, further comprising a payload for providing the communications signals to the array elements wherein the payload is disposed close to the array elements and communicatively connected to the array elements.
